# EUROPEAN PATENT SPECIFICATION

(11) **EP 3 827 070 B1**
(45) Date of publication and mention of the grant of the patent: **27.08.2025**
(21) Application number: 19758810.6
(22) Date of filing: 24.07.2019
(51) Int. Cl.: C12L 11/00, B65D 6/28, C12H 1/22, C12G 1/02

(54) **TANK STRUCTURE, PARTICULARLY FOR WINE PRODUCTION OR FOR STORING ALCOHOLIC PRODUCTS**
TANKSTRUKTUR, INSBESONDERE ZUR WEINHERSTELLUNG ODER ZUR LAGERUNG ALKOHOLISCHER PRODUKTE
STRUCTURE DE RÉSERVOIR, EN PARTICULIER POUR LA PRODUCTION DE VIN OU POUR LE STOCKAGE DE PRODUITS ALCOOLISÉS

(30) Priority: 25.07.2018 IT 201800007482
(43) Date of publication of application: 02.06.2021
(73) Proprietor: Defranceschi S.r.l., 40026 Imola (BO) (IT)
(72) Inventor: MARASTONI, Daniele, 40017 San Giovanni In Persiceto (IT)
(74) Representative: Modiano, Micaela Nadia
(86) International application number: PCT/IB2019/056327
(87) International publication number: WO 2020/021471

(56) References cited:
- EP-A1- 1 582 580
- WO-A2-2006/079987
- ES-U- 1 049 272

## Description

The present invention relates to a tank, particularly for wine production or for storing alcoholic products. ES1049272 and EP1582580 disclose such a tank.

Wine production is the biochemical process for transforming grapes in wine and for refinement thereof.

Tanks, for example made of steel, concrete, fiberglass, are well known and widely used for wine production and/or for the storage of alcoholic products such as wine.

Such tanks typically have a supporting structure or frame for a containment body which forms internally a chamber designed to contain must or wine.

The containment body comprises a bottom wall, a lateral containment surface and an upper closure wall.

Typically, at the upper closure wall there is a hatch or an upper stack that can be used for loading or for inspection of the material contained inside the chamber.

In many cases, especially in the case of tank of considerable size, there are supporting structures for grid-like walkways or for platforms for accessing the various upper hatches.

The supporting structures are in general made of metal and are provided, proximate to the various hatches, with walking surfaces with corresponding safety railings.

These constructive solutions, although widely used, are not however free from drawbacks.

Sometimes, the upper access stacks must therefore be arranged off-center with respect to the axis of the tank in order to arrange them near the lateral walkways, but in this manner the visual field is limited considerably.

Furthermore, it is necessary to design in each instance, according to the distribution of the tanks in the cellar, the supporting structures and the various platforms and walkways according to the arrangements of the tanks.

For this reason, it is often impossible to adapt the supporting structures and the platforms and walkways if the distribution of the tanks is changed or if the type of tanks is changed.

Furthermore, it is noted that known solutions necessarily entail that the upper closure walls of the tanks are frustum-shaped, in order to ensure their cleaning and washing, thus limiting, at equal height, the capacity of said tanks.

The aim of the present invention is to provide a tank that is capable of improving the background art in one or more of the above mentioned aspects.

Within this aim, an object of the invention is to provide a tank that allows to optimize the arrangement of the platforms and walkways, simplifying and reducing the burden of any construction and/or moving operations.

Another object of the invention is to provide a tank that is highly reliable, relatively easy to provide and at competitive costs.

This aim and these and other objects that will become better apparent hereinafter are achieved by a tank according to claim 1, optionally provided with one or more of the characteristics of the dependent claims.

Further characteristics and advantages of the invention will become better apparent from the description of some preferred but not exclusive embodiments of the tank according to the invention, illustrated by way of non-limiting example in the accompanying drawings, wherein:

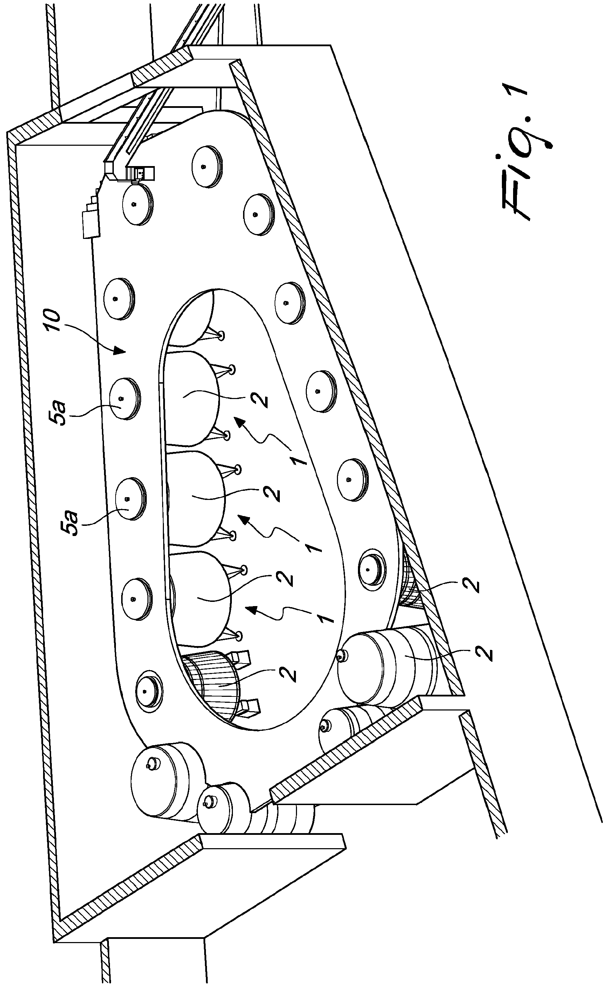

Figure 1 is a perspective and schematic view of a room used to contain tank according to the invention;

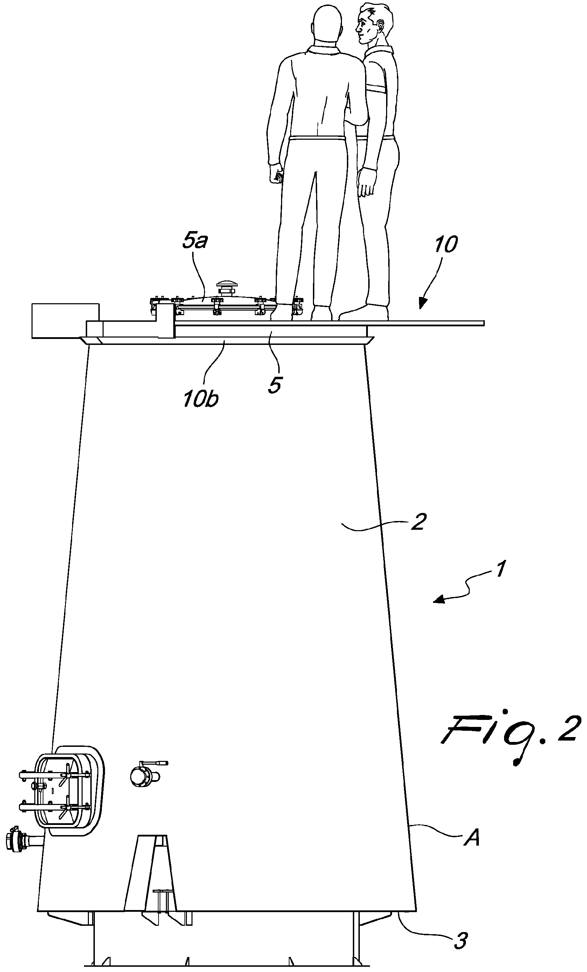

Figure 2 is a side view of a tank according to the invention;

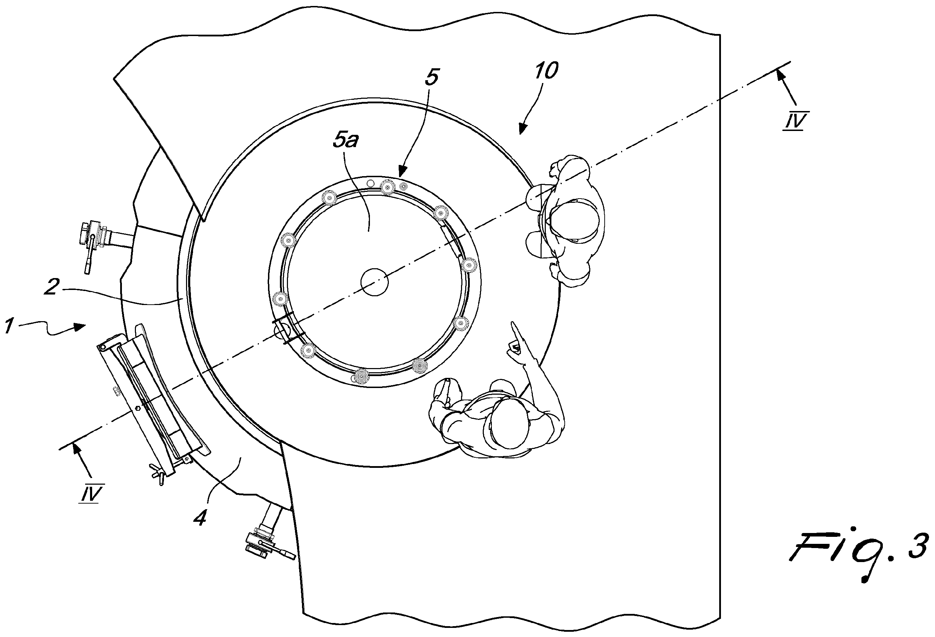

Figure 3 is a top view of the tank according to the invention;

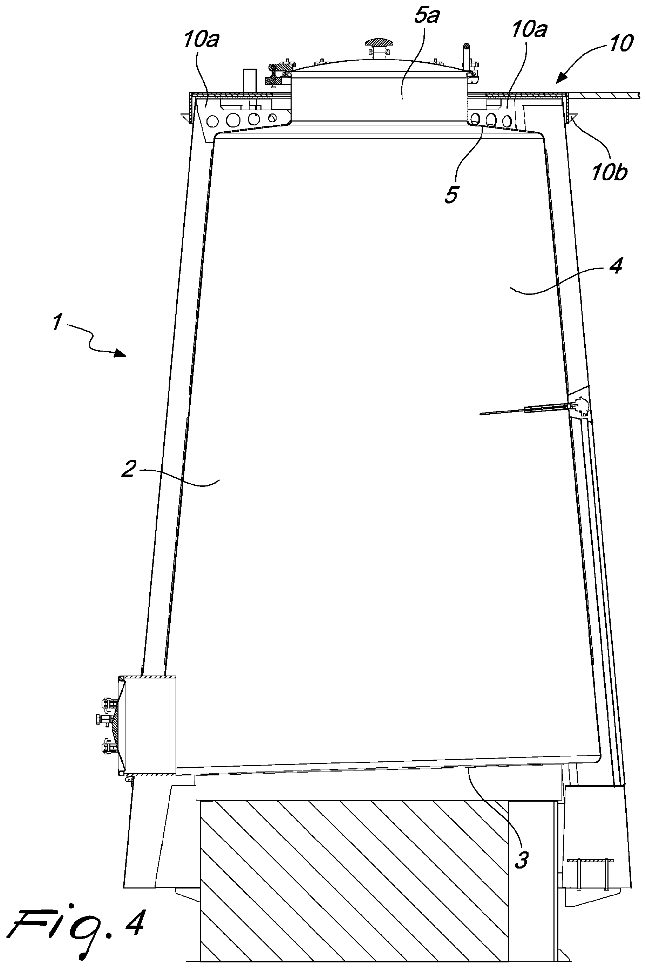

Figure 4 is a sectional view of the tank, taken along the plane of arrangement indicated by the line IV-IV of Figure 3;

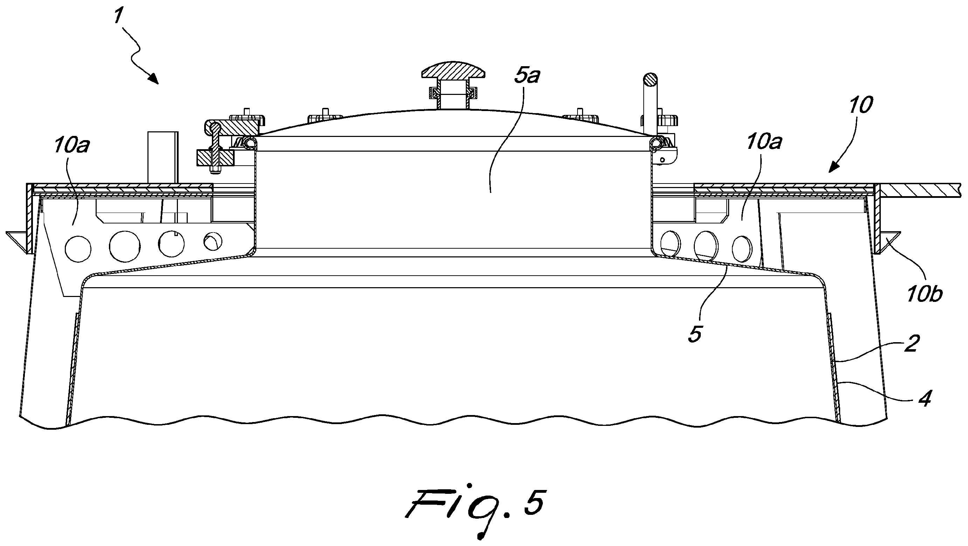

Figure 5 is an enlarged-scale view of a portion of the cross-section shown in Figure 4.

The tank according to the present invention, generally designated by the reference numeral 1, comprises a supporting frame for at least one containment body 2 having a bottom wall 3, a lateral containment surface 4 and an upper closure wall 5.

The tank 1 is furthermore associated with a walkway 10 for accessing the upper closure wall 5.

According to the present invention, the access walkway 10 comprises at least one walkway portion supported directly by the supporting frame of the tank 1.

In particular, the supporting frame of the walkway supports at least partially the access walkway 10.

According to a possible constructive variation, the supporting frame of the walkway fully supports the portion of the access walkway 10, at least the one facing the upper closure wall.

The supporting frame of the walkway can also fully support the portion of the access walkway 10.

At least one portion of the access walkway is formed at the upper closure wall 5.

Conveniently, the access walkway 10 is formed at the upper closure wall 5.

The upper closure wall 5 forms at least one upper access stack 5a.

Preferably, supporting spacers 10a can be interposed between the upper closure wall 5 and the access walkway 10.

The supporting spacers 10a can comprise blade elements, arranged radially with respect to the tank and on a substantially vertical plane.

The lateral containment surface 4 may also be associated with at least one supporting body 10b for the access walkway 10.

Preferably, the supporting body 10b extends for an angular portion around the axis of the tank 1.

The walkway portion formed at the upper closure wall is arranged, proximate to the access hatch 5a.

The walkway portion defined at the upper closure wall is arranged around the access hatch or stack 5a.

At least one walkway portion is arranged so that it faces and is spaced from the upper closure wall 5 of the containment body 2.

The walkway portion is provided by a continuous flat surface that is not perforated or grid-like.

A thermal insulation region is arranged between the walkway portion and the upper closure wall 5.

The access hatch or stack 5a extends in a vertical direction and preferably has at least the top portion arranged at a higher level than the level of the walkway portion formed at the upper closure wall.

According to a practical embodiment, the walkway portion supported directly by the supporting frame is associated integrally with the containment chamber.

In particular, the containment chamber is made of metallic material.

Preferably, the tank 1 comprises a tank for wine production and/or a storage tank.

In practice it has been found that the invention achieves the intended aim and objects, providing a tank capable of optimizing the arrangement of the platforms and walkways.

The invention thus conceived is susceptible of numerous modifications and variations, all of which are within the scope of the appended claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A tank structure (1) that comprises a wine production tank and/or a storage tank, the tank structure (1) comprising a supporting frame for at least one containment body (2) which has a bottom wall (3), a lateral containment surface (4) and an upper closure wall (5), a walkway being provided for accessing said upper closure wall, said access walkway (10) comprising at least one walkway portion which is supported directly by said supporting frame of said tank (1), at least one portion of said access walkway is formed at said upper closure wall (5); wherein said upper closure wall (5) forms at least one access hatch (5a), said portion of said walkway formed at said upper closure wall being arranged proximate to said access hatch (5a); and wherein said at least one walkway portion is arranged facing and spaced with respect to said upper closure wall (5) of said containment body (2);
**characterized in that** said portion of said walkway formed at said upper closure wall is arranged around said access hatch (5a),
and **in that** said walkway portion is provided by a continuous flat surface that is not perforated or grid-like;
a thermal insulation region being arranged between the walkway portion and the upper closure wall (5).

2. The tank (1) according to one or more of the preceding claims, **characterized in that** said walkway portion supported directly by said supporting frame is associated integrally with said containment chamber.

3. The tank (1) according to one or more of the preceding claims, **characterized in that** said containment chamber is made of metallic material.

4. The tank (1) according to one or more of the preceding claims, **characterized in that** said supporting frame completely supports the portion of the access walkway (10) that faces the upper closure wall (5).

5. The tank (1) according to one or more of the preceding claims, **characterized in that** said supporting frame completely supports said access walkway (10).

6. The tank (1) according to one or more of the preceding claims, **characterized in that** supporting spacers (10a) are interposed between said upper closure wall (5) and said access walkway (10).

## Patentansprüche

1. Eine Tankstruktur (1), die einen Weinherstellungstank und/oder einen Lagerungstank umfasst, wobei die Tankstruktur (1) einen Tragrahmen für mindestens einen Behälterkörper (2) umfasst, der eine Bodenwand (3), eine seitliche Behälteroberfläche (4) und eine obere Verschlusswand (5) hat; wobei eine Plattform für den Zugang zu der oberen Verschlusswand bereitgestellt ist, wobei die Zugangsplattform (10) mindestens einen Plattformabschnitt umfasst, der direkt von dem Tragrahmen des Tanks (1) getragen ist; mindestens ein Teil der Zugangsplattform ist an der oberen Verschlusswand (5) geformt; wobei die obere Verschlusswand (5) mindestens eine Zugangsluke (5a) bildet, wobei der Teil der Plattform, der an der oberen Verschlusswand gebildet ist, in der Nähe der Zugangsluke (5a) angeordnet ist und wobei der mindestens eine Plattformabschnitt der oberen Verschlusswand (5) des Behälterkörpers (2) zugewandt und von ihr beabstandet angeordnet ist;
**dadurch gekennzeichnet, dass** der Teil der Plattform, der an der oberen Verschlusswand geformt ist, um die Zugangsluke (5a) angeordnet ist,
und dadurch, dass der Plattformabschnitt von einer durchgehenden flachen Oberfläche gebildet ist, die nicht durchlöchert oder gitterartig ist;
wobei ein Wärmeisolierbereich zwischen dem Plattformabschnitt und der oberen Verschlusswand (5) angeordnet ist.

2. Der Tank (1) gemäß einem oder mehreren der obigen Ansprüche, **dadurch gekennzeichnet, dass** der Plattformabschnitt, der direkt von dem Tragrahmen getragen ist, integral mit der Behälterkammer verbunden ist.

3. Der Tank (1) gemäß einem oder mehreren der obigen Ansprüche, **dadurch gekennzeichnet, dass** die Behälterkammer aus Metallmaterial besteht.

4. Der Tank (1) gemäß einem oder mehreren der obigen Ansprüche, **dadurch gekennzeichnet, dass** der Tragrahmen den Abschnitt der Zugangsplattform (10), der der oberen Verschlusswand (5) zugewandt ist, vollständig trägt.

5. Der Tank (1) gemäß einem oder mehreren der obigen Ansprüche, **dadurch gekennzeichnet, dass** der Tragrahmen die Zugangsplattform (10) vollständig trägt.

6. Der Tank (1) gemäß einem oder mehreren der obigen Ansprüche, **dadurch gekennzeichnet, dass** tragende Abstandselemente (10a) zwischen der oberen Verschlusswand (5) und der Zugangsplattform (10) angeordnet sind.

## Revendications

1. Structure de réservoir (1) comprenant un réservoir de production de vin et/ou un réservoir de stockage, la structure de réservoir (1) comprenant un châssis de support pour au moins un corps de confinement (2) qui comporte une paroi inférieure (3), une surface de confinement latérale (4) et une paroi de fermeture supérieure (5), une passerelle étant prévue pour accéder à ladite paroi de fermeture supérieure, ladite passerelle d'accès (10) comprenant au moins une partie de passerelle qui est supportée directement par ledit châssis de support de ladit réservoir (1), au moins une partie de ladite passerelle d'accès est formée au niveau de ladite paroi de fermeture supérieure (5) ; où ladite paroi de fermeture supérieure (5) forme au moins une trappe d'accès (5a), ladite partie de ladite passerelle formée au niveau de ladite paroi de fermeture supérieure étant disposée à proximité de ladite trappe d'accès (5a) ; et où ladite au moins une partie de passerelle est disposée en regard et à distance de ladite paroi de fermeture supérieure (5) dudit corps de confinement (2) ;
**caractérisé en ce que** ladite partie de ladite passerelle formée au niveau de ladite paroi de fermeture supérieure est disposée autour de ladite trappe d'accès (5a), et **en ce que** ladite partie de passerelle est constituée d'une surface plane continue qui n'est pas perforée ou grillagée ;
une zone d'isolation thermique étant disposée entre la partie de passerelle et la paroi de fermeture supérieure (5).

2. Le réservoir (1) selon l'une ou plusieurs des revendications précédentes, **caractérisée en ce que** ladite partie de passerelle supportée directement par ledit châssis de support est associée de manière intégrale à ladite chambre de confinement.

3. Le réservoir (1) selon une ou plusieurs des revendications précédentes, **caractérisée en ce que** ladite chambre de confinement est réalisée en un matériau métallique.

4. Le réservoir (1) selon une ou plusieurs des revendications précédentes, **caractérisée en ce que** ledit châssis de support supporte complètement la partie de la passerelle d'accès (10) qui fait face à la paroi de fermeture supérieure (5).

5. Le réservoir (1) selon l'une ou plusieurs des revendications précédentes, **caractérisée en ce que** ledit châssis de support supporte complètement ladite passerelle d'accès (10).

6. Le réservoir (1) selon l'une ou plusieurs des revendications précédentes, **caractérisée en ce que** des entretoises de support (10a) sont interposées entre ladite paroi de fermeture supérieure (5) et ladite passerelle d'accès (10).
